# FASCICULE DE BREVET EUROPEEN

(11) **EP 2 091 886 B1**
(45) Date de publication et mention de la délivrance du brevet: **10.05.2017**
(21) Numéro de dépôt: 07858641.9
(22) Date de dépôt: 22.10.2007
(51) Int. Cl.: C04B 7/36

(54) **PROCEDE DE FABRICATION DE CLINKER A EMISSION DE CO2 CONTROLEE**
VERFAHREN ZUR HERSTELLUNG EINES KLINKERS MIT GESTEUERTER CO2-EMISSION
PROCESS FOR MANUFACTURING CLINKER WITH CONTROLLED CO2 EMISSION

(30) Priorité: 09.11.2006 FR 0654794
(43) Date de publication de la demande: 26.08.2009
(73) Titulaire: L'AIR LIQUIDE, Société Anonyme pour l'Etude et l'Exploitation des Procédés Georges Claude, 75007 Paris (FR)
(72) Inventeur: PENFORNIS, Erwin, 92300 Levallois-Perret (FR); DE SMEDT, Guillaume, 92160 Antony (FR)
(74) Mandataire: De Vleeschauwer, Natalie Y.L.D.
(86) Numéro de dépôt international: PCT/FR2007/052219
(87) Numéro de publication internationale: WO 2008/056068

(56) Documents cités:
- WO-A-03/068368
- WO-A-2004/065849
- WO-A-2005/059460
- FR-A1- 2 248 870
- US-A- 4 548 580
- US-A- 5 662 050
- US-A1- 2006 144 297
- DATABASE WPI Week 199727 Derwent Publications Ltd., London, GB; AN 1997-294678 XP002436951 & JP 09 110485 A (ISHIKAWAJIMA HARIMA HEAVY IND) 28 avril 1997 (1997-04-28)

## Description

La présente invention concerne un procédé de fabrication de clinker permettant de contrôler les émissions de CO₂ dans l'atmosphère.

Les procédés de fabrication de clinker sont parmi les procédés industriels les plus émetteurs de CO₂, dans les mêmes proportions que l'industrie sidérurgique. Ils représentent chacun de l'ordre de 5 % des émissions de CO₂ d'origine anthropique. Cette quantité importante de rejets CO₂ pour la cimenterie vient non seulement de la consommation intensive d'énergie dans le procédé d'élaboration du clinker, mais surtout de la réaction de calcination du calcaire, qui libère une quantité très importante de CO₂ (0,5 tonne de CO₂ produite par ce mécanisme pour chaque tonne de clinker produite). La mise en place de nouvelles réglementations dans le cadre du protocole de Kyoto imposent aux différents pays qui ont ratifié ce protocole la réduction de ces émissions de CO₂, selon des objectifs fixés par période. Si les objectifs à court-terme semblent relativement faciles à atteindre avec des mesures primaires de réduction du CO₂, les objectifs moyen et long terme, qui doivent encore être établis, devraient devenir beaucoup plus contraignants, surtout pour des industries telles que la cimenterie. On recherche donc actuellement des solutions technologiques permettant d'atteindre ces objectifs futurs, et ce pour un coût raisonnable ne mettant pas en péril la viabilité de la filière actuelle.

Les solutions actuelles envisagées dans le cadre des installations de cimenterie pour réduire leurs émissions de CO₂ sont de deux types. Tout d'abord des mesures primaires, permettant pour un coût raisonnable d'abattre les émissions de CO₂ de l'ordre de 15 à 20 % au maximum ; il s'agit :
- de la diminution de la consommation de combustible carboné (amélioration du rendement énergétique, substitution du coke de pétrole par du gaz naturel)
- de l'utilisation accrue de combustibles alternatifs, considérés comme neutre par rapport au cycle de production du CO₂ (biomasse, déchets divers)
- de l'utilisation de substituts au clinker dans la préparation du ciment, tels que des cendres volantes de centrales thermiques et du laitier de hauts-fourneaux.

Malheureusement, ces techniques n'ont pas le potentiel de générer des réductions de CO₂ au delà de 15 à 20% et se heurtent très souvent à des problèmes de logistique, qui ne permettent pas de rendre ces solutions totalement pérennes.

Des mesures secondaires sont actuellement à l'étude afin de mettre en place des technologies permettant une réduction des émissions de CO₂ beaucoup plus massives, au delà de 50 %. Les technologies envisagées sont globalement de deux types :
- les méthodes d'élimination du CO₂ des fumées de combustion du procédé (dites de « post-combustion »), par lavement aux amines ou par des procédés d'adsorption ou de liquéfaction, ou par membranes.
- les méthodes d'oxycombustion, permettant de concentrer le flux gazeux en CO₂, en éliminant l'azote lors du processus de combustion. De cette manière, ce flux peut alors être quasiment composé exclusivement de CO₂ (après condensation de la vapeur) si le remplacement de l'air de combustion par l'oxygène est total, ou alors suffisamment enrichi en CO₂ (dans le cas d'une substitution partielle de cet air de combustion) pour permettre une utilisation plus économique des technologies de séparation du CO₂.

Ces méthodes secondaires sont pour la plupart techniquement prouvées, souvent dans des domaines d'applications autres, et à des échelles plus restreintes, mais encore à des coûts prohibitifs. Le document US4548580 décrit un procédé de fabrication de clinker à partir d'un cru mettant en oeuvre:
- le préchauffage du cru par des fumées de combustion,
- la précalcination du cru,
- la calcination du cru précalciné dans un four rotatif, dans lequel la précalcination et la calcination dans le four rotatif produisent des fumées de combustion comprenant du CO2, caractérisé en ce les fumées de combustion créées par la précalcination sont mélangés avec les fumées de combustion issue par la calcination dans le four rotatif avant d'être évacuées vers une installation avale au moyen d'une soufflante.

Le document WO03/068368 n'appartient pas au même domaine, mais il concerne un procédé pour contrôler l'émission des matériaux toxiques et du gaz carbonique est mis en oeuvre en substituant l'air de combustion par de l'air enrichi en oxygène ou bien par de l'oxygène pur. Ce procédé utilise une chaudière comme installation est destiné à générer la vapeur permettant de limiter les émissions de polluants grâce à l'utilisation pour la combustion d'un oxydant riche en oxygène. Le but de la présente invention est de proposer un procédé de fabrication de clinker permettant une récupération des fumées de combustion produites par ce procédé de manière à en éliminer le CO₂ à un coût rentable.

Dans ce but, l'invention concerne un procédé de fabrication de clinker à partir d'un cru mettant en oeuvre :
- le préchauffage du cru par des fumées de combustion,
- la précalcination du cru,
- la calcination du cru précalciné dans un four rotatif,
dans lequel la précalcination et la calcination dans le four rotatif produisent des fumées de combustion comprenant du CO₂,
et dans lequel on fait subir un traitement d'élimination de CO₂ aux fumées de combustion créées par la précalcination sans mélanger lesdites fumées aux fumées de combustion créées par la calcination dans le four rotatif.

Les trois étapes de préchauffage, précalcination et calcination dans le four rotatif du procédé selon l'invention correspondent au procédé usuel de fabrication de clinker. La matière première ou cru est constituée principalement de calcaire et silice. Au cours de la première étape, ce cru est préchauffé par des fumées de combustion, par exemple par introduction du cru au sommet de cyclones au sein desquels le cru est mis en contact avec des fumées de combustion chaudes. Au cours de la seconde étape, le cru est précalciné : par la formation de chaleur par combustion, on obtient la calcination partielle du cru préchauffé selon la réaction suivante : CaCO₃ → CaO + CO₂. Les fumées générées au cours de la précalcination servent généralement à préchauffer le cru au cours de la première étape de préchauffage. Ces fumées de combustion présentent généralement une concentration en CO₂ d'au moins 30 % en volume. Dans la troisième étape, ces matières précalcinées continuent alors leur chemin au travers du four rotatif, dans lequel elles sont transformées en clinker par le biais d'une réaction entre la chaux et la silice à très haute température (>1450°C). La chaleur nécessaire à cette troisième étape est fournie par une combustion au niveau de l'extrémité basse du four rotatif. Cette troisième étape crée également des fumées de combustion comprenant du CO₂ dans une concentration généralement d'au plus 15 %.

Selon l'invention, on fait subir un traitement d'élimination de CO₂ aux fumées de combustion créées par la deuxième étape de précalcination sans mélanger lesdites fumées aux fumées de combustion créées par la calcination dans le four rotatif. Cette caractéristique est différente de la mise en oeuvre de l'art antérieur, où les fumées générées par la calcination dans le four rotatif circulent ensuite en amont au travers du dispositif de précalcination et de l'espace de préchauffage des matières premières, se mélangeant avec les fumées de combustion issues de la précalcination. Dans la présente invention, les fumées de la calcination dans le four rotatif ne sont pas transmises vers le dispositif de précalcination. Elles font par contre l'objet d'une valorisation énergétique. Les deux premières étapes sont donc totalement désolidarisées de la troisième étape. Les fumées de combustion créées par la calcination dans le four rotatif sont directement éliminées du procédé sans entrer en contact avec les produits de la première et de la deuxième étape.

Toutefois, la chaleur présente dans les fumées de combustion de la calcination mise en oeuvre dans le four rotatif peut être valorisée selon différentes options. Selon une première option, au moins une partie des fumés de combustion créées par la calcination dans le four rotatif peuvent préchauffer le cru de manière indirecte. Selon une deuxième option, au moins une partie des fumées de combustion créées par la calcination dans le four rotatif peuvent préchauffer les réactifs introduits dans le four rotatif de manière indirecte. Selon ces deux options, par "de manière indirecte", on entend le fait que les fumées de combustion créées par la calcination dans le four rotatif ne sont pas mélangées avec la matière à chauffer : le préchauffage se fait à travers une paroi séparant les fumées de la matière à chauffer. Le préchauffage indirect selon ces deux options permet d'éviter le mélange des fumées de combustion de la précalcination et du four rotatif selon l'invention. L'échange indirect peut se faire par tout type d'échangeur de chaleur connu entre le cru ou le cru précalciné avec les fumées de combustion issues du four rotatif. Selon une troisième option, au moins une partie des fumées de combustion créées par la calcination dans le four rotatif peut être utilisée dans une chaudière ou une unité de récupération de chaleur.

Selon une variante avantageuse du procédé selon l'invention, la précalcination du cru met en oeuvre une oxycombustion. Par oxycombustion, on entend une combustion mise en oeuvre au moyen d'un combustible et d'un oxydant présentant une concentration en oxygène supérieure à 21 %, de préférence supérieure à 25 %. Un tel oxydant peut être un mélange d'air et d'oxygène dans des proportions adaptées. L'oxycombustion permet d'enrichir les fumées de combustion en CO₂ au niveau de la première et de la deuxième étapes. La concentration en CO₂ dans les fumées résultant de cette oxycombustion est généralement supérieure à 50 % en volume.

Selon une mise en oeuvre préférée de cette variante, l'oxydant mis en oeuvre au cours de l'oxycombustion est de l'oxygène pur. Par oxygène pur, on entend un gaz oxygéné comprenant au moins 90 % d'oxygène. Cette mise en oeuvre préférée permet d'obtenir des fumées de combustion présentant une concentration en CO₂ supérieure à 90 % après condensation. De telles fumées condensées ne nécessitent alors aucun traitement par un procédé d'élimination de CO₂ plus poussé. Elles peuvent être alors partiellement recyclées dans l'étape de précalcination afin d'augmenter le flux gazeux au sein des deux premières étapes et maintenir de bonnes conditions d'échange thermique convectif. L'invention couvre donc également le cas où les fumées issues de l'oxycombustion sont condensées et les fumées condensées sont au moins partiellement recyclées dans la précalcination du cru. Dans la mesure où la calcination partielle du cru crée naturellement un effluent gazeux riche en CO₂, un enrichissement partiel en oxygène de l'oxydant de la combustion permet d'atteindre rapidement une concentration très élevée en CO₂ dans les fumées de la précalcination.

La mise en oeuvre de l'invention permet de concentrer en CO₂ les fumées de combustion issues des zones de préchauffage et de précalcination. Ainsi, 50 à 90 % du volume global de CO₂ généré par la cimenterie peut être regroupé au niveau de l'ensemble du dispositif de précalcination et du préchauffeur, au sein d'un flux de fumées de combustion dont le débit est inférieur de moitié à celui d'une cimenterie selon l'art antérieur ; cette différence rend l'utilisation des procédés d'élimination du CO₂ des fumées de combustion beaucoup plus rentables, même dans l'état actuel des technologies car les procédés d'élimination traitent ainsi des débits moindres à des concentrations en CO₂ plus élevées, qui sont généralement au moins supérieures à 40 % en volume.

Selon la variante du procédé mettant en oeuvre une oxycombustion au cours de la précalcination, les coûts des procédés d'élimination du CO₂ des fumées de combustion sont encore plus réduits en raison du débit réduit de fumées et de leur concentration encore plus élevée en CO₂, qui est généralement au moins supérieure à 50 % en volume.

## Revendications

1. Procédé de fabrication de clinker à partir d'un cru mettant en oeuvre :
- le préchauffage du cru par des fumées de combustion,
- la précalcination du cru,
- la calcination du cru précalciné dans un four rotatif,
dans lequel la précalcination et la calcination dans le four rotatif produisent des fumées de combustion comprenant du CO₂,
**caractérisé en ce qu'**on fait subir un traitement d'élimination de CO₂ aux fumées de combustion créées par la précalcination sans mélanger lesdites fumées aux fumées de combustion créées par la calcination dans le four rotatif.

2. Procédé selon la revendication 1, **caractérisé en ce qu'**au moins une partie des fumées de combustion créées par la calcination dans le four rotatif préchauffent le cru de manière indirecte.

3. Procédé selon la revendication 1 ou 2, **caractérisé en ce qu'**au moins une partie des fumées de combustion créées par la calcination dans le four rotatif préchauffent les réactifs introduits dans le four rotatif de manière indirecte.

4. Procédé selon l'une des revendications précédentes, **caractérisé en ce qu'**au moins une partie des fumées de combustion créées par la calcination dans le four rotatif est utilisée dans une chaudière ou une unité de récupération de chaleur.

5. Procédé selon l'une des revendications précédentes, **caractérisé en ce que** la précalcination du cru met en oeuvre une oxycombustion.

6. Procédé selon la revendication 5, **caractérisé en ce que** l'oxydant mis en oeuvre au cours de l'oxycombustion est de l'oxygène pur.

7. Procédé selon la revendication 5 ou 6, **caractérisé en ce que** les fumées issues de l'oxycombustion sont condensées et les fumées condensées sont au moins partiellement recyclées dans la précalcination du cru.

## Patentansprüche

1. Verfahren zur Herstellung von Klinker aus Rohmehl, das Folgendes implementiert:
- Vorerhitzen des Rohmehls durch Verbrennungsrauch,
- Vorkalzinieren des Rohmehls,
- Kalzinieren des vorkalzinierten Rohmehls in einem Drehofen,
wobei das Vorkalzinieren und das Kalzinieren im Drehofen Verbrennungsrauch mit CO₂ erzeugen,
**dadurch gekennzeichnet, dass** der Verbrennungsrauch, erzeugt durch das Vorkalzinieren, einer Behandlung zur Beseitigung von CO₂ unterzogen wird, ohne den Rauch mit dem Verbrennungsrauch zu mischen, der durch das Kalzinieren im Drehofen erzeugt wird.

2. Verfahren nach Anspruch 1, **dadurch gekennzeichnet, dass** mindestens ein Teil des Verbrennungsrauchs, der durch das Kalzinieren im Drehofen erzeugt wurde, das Rohmehls auf indirekte Weise vorerhitzt.

3. Verfahren nach Anspruch 1 oder 2, **dadurch gekennzeichnet, dass** mindestens ein Teil des Verbrennungsrauchs, der durch das Kalzinieren im Drehofen erzeugt wurde, die Reagenzien, die in den Drehofen eingeführt wurden, auf indirekte Weise vorerhitzt.

4. Verfahren nach einem der vorhergehenden Ansprüche, **dadurch gekennzeichnet, dass** mindestens ein Teil des Verbrennungsrauchs, der durch das Kalzinieren im Drehofen erzeugt wurde, in einem Kessel oder einer Einheit zur Wiedergewinnung von Hitze verwendet wird.

5. Verfahren nach einem der vorhergehenden Ansprüche, **dadurch gekennzeichnet, dass** das Vorkalzinieren des Rohmehls eine Sauerstoffverbrennung implementiert.

6. Verfahren nach Anspruch 5, **dadurch gekennzeichnet, dass** das Oxidationsmittel, das im Laufe der Sauerstoffverbrennung implementiert wird, reiner Sauerstoff ist.

7. Verfahren nach Anspruch 5 oder 6, **dadurch gekennzeichnet, dass** der Rauch, der aus der Sauerstoffverbrennung stammt, kondensiert wird, und der kondensierte Rauch mindestens teilweise beim Vorkalzinieren des Rohmehls recycelt wird.

## Claims

1. Method for manufacturing clinker from a raw meal, comprising:
- preheating of the raw meal by combustion flue gases,
- precalcination of the raw meal,
- calcination of the precalcined raw mix in a rotary kiln,
in which method the precalcination and the calcination in the rotary kiln produce combustion flue gases comprising CO₂,
**characterized in that** the combustion flue gases created by the precalcination undergo a CO₂-removal treatment without mixing said flue gases with the combustion flue gases created by the calcination in the rotary kiln.

2. Method according to claim 1, **characterized in that** at least a portion of the combustion flue gases created by the calcination in the rotary kiln preheat the raw meal in an indirect manner.

3. Method according to claim 1 or 2, **characterized in that** at least a portion of the combustion flue gases created by the calcination in the rotary kiln preheat the reactants introduced into the rotary kiln, in an indirect manner.

4. Method according to one of the preceding claims, **characterized in that** at least a portion of the combustion flue gases created by the calcination in the rotary kiln is used in a boiler or a heat recovery unit.

5. Method according to one of the preceding claims, **characterized in that** the precalcination of the raw meal uses oxy-combustion.

6. Method according to claim 5, **characterized in that** the oxidant used during the oxy-combustion is pure oxygen.

7. Method according to claim 5 or 6, **characterized in that** the flue gases from the oxy-combustion are condensed and the condensed flue gases are at least partially recycled into the raw meal precalcination.
